(19) Europäisches Patentamt
European Patent Office
Office européen des brevets

(11) Veröffentlichungsnummer: **0 112 799**
**A1**

(12) # EUROPÄISCHE PATENTANMELDUNG

(21) Anmeldenummer: **83810556.7**

(22) Anmeldetag: **30.11.83**

(51) Int. Cl.³: **A 01 N 43/40**, A 01 N 25/32
// (A01N43/40, 39/04)

(30) Priorität: **06.12.82 CH 7077/82**

(43) Veröffentlichungstag der Anmeldung: **04.07.84**
**Patentblatt 84/27**

(84) Benannte Vertragsstaaten: **AT BE CH DE FR GB IT LI NL SE**

(71) Anmelder: **CIBA-GEIGY AG, Postfach, CH-4002 Basel (CH)**

(72) Erfinder: **Quadranti, Marco, Dr., Spitalrain 7, CH-5200 Brugg (CH)**
Erfinder: **Maurer, Willy, Unterm Schellenberg 160, CH-4125 Riehen (CH)**

(54) **Herbizides Mittel zur selektiven Unkrautbekämpfung in Getreide.**

(57) Mittel, die als Wirkstoff einerseits einen Wirkstoff der Formel I

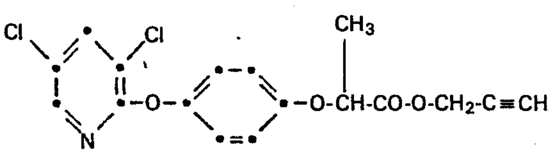

(I)

und einer Chlorphenoxyessigsäure der Formel II

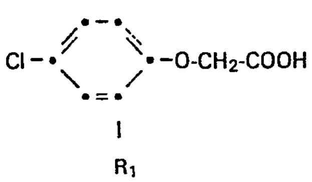

(II)

worin $R_1$ Methyl oder Chlor, bedeutet, zeigen in Getreide antagonistische Wirkung gegen Kulturschädigung durch Herbizide.

EP 0 112 799 A1

CIBA-GEIGY AG
Basel (Schweiz)

5-14213/-

Herbizides Mittel zur selektiven Unkrautbekämpfung in Getreide

Die vorliegende Erfindung betrifft ein herbizides Mittel zur selektiven Unkrautbekämpfung in Getreide mit antagonistischer Wirkung auf die Kulturpflanzen sowie ein Verfahren zur selektiven Bekämpfung von Unkräutern in Getreidekulturen unter Verwendung des erfindungsgemässen Mittels.

Es ist bekannt, dass Herbizide aus den verschiedensten Stoffklassen, wie Triazine, Harnstoffderivate, Carbamate, Thiolcarbamate, Halogenacetanilide, Halogenphenoxyessigsäuren, Pyridyloxyphenoxypropionsäure, Phenoxyphenoxypropionsäuren usw. bei der Anwendung in wirksamer Dosis gelegentlich neben den zu bekämpfenden Unkräutern auch die Kulturpflanzen in gewissem Masse schädigen. Ueberdosen werden oft ungewollt und zufälligerweise appliziert, wenn sich Randzonen beim streifenweisen Spritzen überdecken, sei es durch Windeinwirkung oder durch falsches Einschätzen der Breitenwirkung des Spritzgerätes. Es können klimatische Verhältnisse oder eine Bodenbeschaffenheit vorliegen, so dass die für normale Bedingungen empfohlene Herbizidmenge als Ueberdosis wirkt. Die Qualität des Saatgutes kann bei der Herbizidverträglichkeit auch eine Rolle spielen. Um diesem Problem zu begegnen, sind schon verschiedene Stoffe vorgeschlagen worden, welche befähigt sind, die schädigende Wirkung des Herbizids auf die Kulturpflanze spezifisch zu antagonisieren, d.h. die Kulturpflanze zu schützen, ohne dabei die Herbizidwirkung auf die zu bekämpfenden Unkräuter merklich zu beeinflussen. Dabei hat es sich gezeigt, dass die vorgeschlagenen Gegenmittel sowohl bezüglich der Kulturpflanzen als auch bezüglich des Herbizids und gegebenenfalls auch in Abhängigkeit von der Applikationsart oft sehr artspezifisch wirken, d.h. ein bestimmtes Gegenmittel eignet sich oft nur für eine bestimmte Kulturpflanze und einige wenige herbizide Stoffklassen.

Es wurde nun völlig überraschend gefunden, dass herbizide Mittel, die eine Wirkstoffkombination aus einem Pyridyloxyphenoxypropionsäureester der Formel I

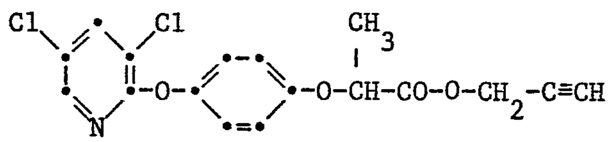

(I)

und einer Chlorphenoxyessigsäure der Formel II

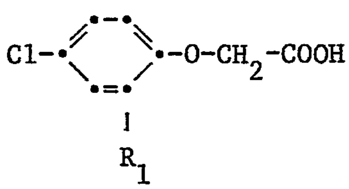

(II)

worin $R_1$ für Methyl oder Chlor steht, enthalten, eine antagonisierende Wirkung auf Getreidekulturpflanzen wie Gerste, Roggen und Weizen haben, ohne dass die Herbizidwirkung auf die Unkräuter geschwächt wird.

Der Wirkstoff der Formel I ist als Herbizid aus der europäischen Patentpublikation 3114 bekannt, die der Formel II werden seit langer Zeit als Herbizide in der landwirtschftlichen Praxis eingesetzt.

Kürzlich sind verschiedene Wirkstoffkombinationen mit synergistischer Wirkung beschrieben worden, die das Herbizid der Formel I und verschiedene handelsübliche Pestizide enthalten (EP-A-43802 und Research Disclosure, 196, S. 343 (1980)).

Im Gegensatz zu den bekannten Wirkstoffkombinationen besitzen die erfindungsgemässen Mittel, die neben der Herbizidkomponente einen Wirkstoff der Formel II in nicht phytotoxischer Menge enthalten, eine antagonistische Wirkung. Die gelegentlich auftretende Schädigung der Kulturpflanzen durch das Herbizid der Formel I wird dadurch vollständig oder grösstenteils verhindert. Die erfindungsgemässen Mittel erhöhen somit die Sicherheitsmarge, die für die Anwendung von Herbiziden generell notwendig ist, um die Folgen einer unbeabsichtigten Ueberdosierung zu vermeiden.

Unter die Definitionen der Formeln I und II fallen die folgenden Wirkstoffe:

I : 4-(3',5'-Dichlorpyridyl-2'-oxy)-α-phenoxy-propionsäure-propargylester,

IIa: 2,4-Dichlorphenoxyessigsäure (2,4-D) und

IIb: 4-Chlor-2-methylphenoxyessigsäure (MCPA).

Als besonders bevorzugtes Mittel ist dasjenige hervorzuheben, dass als Herbizidkomponente 4-(3',5'-Dichlorpyridyl-2'-oxy)-α-phenoxy-propionsäurepropargylester und als antagonistische Komponente 2,4-Dichlorphenoxyessigsäure enthält.

In den erfindungsgemässen Mitteln liegt die Komponente I in der Regel im Ueberschuss vor. Bevorzugt ist ein Mischungsverhältnis der Komponenten I und II zwischen 1:1 und 8:1.

Die erfindungsgemässen Mittel vernichten die Mehrzahl aller wichtigen Getreideunkräuter wie Dikotyledonen wie Chrysanthemum und Sinapis sowie Monokotyledonen wie Agrostis und Wildhaferarten selektiv in den aufgelaufenen Getreidekulturen.

Die erfindungsgemässen Mittel können ausser in Getreidekulturen wie Gerste, Roggen und insbesondere Weizen auch zur selektiven Unkrautbekämpfung in anderen monokotylen Kulturen ähnlicher Wirkstoffempfindlichkeit mit ähnlichem Unkrautbestand eingesetzt werden, wie z.B. in Mais oder Reis.

Die Aufwandmengen betragen üblicherweise zwischen 0,1 kg/ha und 0,60 kg/ha berechnet auf die Gesamtmenge an Wirkstoffgemisch. Der Anteil der Wirkstoffkomponente II beträgt dabei 0,05 bis 0,15 kg/ha.

Die vorliegende Erfindung betrifft auch die Verwendung des erfindungsgemässen Mittels, also ein Verfahren zur selektiven Ungras- und Unkrautbekämpfung in Getreide unter postemergenter Anwendung des Mittels.

Die Wirkstoffe der Formel I und II werden mit Vorteil in einem einzigen Arbeitsgang gemeinsam auf die zu behandelnden Kulturen appliziert. Es is jedoch auch möglich, die beiden Wirkstoffkomponenten zur Erzielung des antagonistischen Effekts getrennt voneinander in kurzem zeitlichen Abstand anzuwenden. Eine weitere Anwendungsform der antagonischen Wirkstoffkombination besteht darin, dass man das Saatgut der Kulturpflanzen mit der erfindungsgemässen Kombination der Wirkstoffe I und II behandelt (Saatbeize). Eine Variante besteht hier darin, dass man Saatgut mit der antagonistischen Komponente der Formel II behandelt (beizt) und die herbizide Komponente direkt nach der Aussaat auf die angesäten Kulturflächen appliziert. So behandeltes Saatgut bildet einen weiteren Gegenstand der vorliegenden Erfindung.

Das erfindungsgemässe Mittel enthält neben den genannten Wirkstoffen noch geeignete Träger und/oder andere Zuschlagstoffe. Diese können

fest oder flüssig sein und entsprechen den in der Formulierungstechnik üblichen Stoffen wie z.B. natürlichen oder regenerierten mineralischen Stoffen, Lösungs-, Dispergier-, Netz-, Haft-, Verdickungs-, Bindemittel oder Düngemitteln. Geeignete Anwendungsformen sind daher z.B. Emulsionskonzentrate, direkt versprühbare oder verdünnbare Lösungen, verdünnte Emulsionen, Spritzpulver, lösliche Pulver, Stäubemittel, Granulate, auch Verkapselungen in z.B. polymeren Stoffen. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d.h. die das erfindungsgemässe Wirkstoffgemisch und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethlenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen als auch wasserlösliche synthetische oberflächenaktive Verbindungen sein.

Als Seifen seien die Alkali-, Erdalkali- oder gegebenenfalls substituierte Ammoniumsalze von höheren Fettsäuren ($C_{10}$-$C_{22}$), wie z.B. die Na- oder K-Salze der Oel oder Stearinsäure, oder von natürlichen Fettsäuregemischen, die z.B. aus Kokosnuss- oder Talgöl gewonnen werden können, genannt. Ferner sind auch die Fettsäuremethyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2-Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxid-Adduktes oder Phospholipide in Frage.

Als nichtionische Tenside kommen in erster Linie Polyglykolätherderivaten von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykoläther, Polypropylen-Polyäthylenoxidaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)-äthylammoniumbromid.

Die in der Formulierungstechnik gebräuchlichen Tenside sind u.a. in folgenden Publikationen beschrieben:

"Mc Cutcheon's Detergents and Emulsifiers Annual" MC Publishing Corp., Ridgewood, New Jersey, 1981;
H. Stache, "Tensid-Taschenbuch", 2. Aufl., C. Hanser Verlag, München, Wien, 1981;
M. and J. Ash. "Encyclopedia of Surfactants", Vol. I-III, Chemical Publishing Co., New York, 1980-1981.

Der Wirkstoffgehalt in handelsfähigen Mitteln liegt zwischen 0,1 bis 95 Gewichtsprozent, vorzugsweise 1 bis 80 Gewichtsprozent.

Insbesondere setzen sich bevorzugte Formulierungen folgendermassen zusammen: (% = Gewichtsprozent).

Lösungen:

| | |
|---|---|
| Aktiver Wirkstoff: | 5 bis 95%, vorzugsweise 10 bis 80% |
| Lösungsmittel: | 95 bis 5%, vorzugsweise 90 bis 0% |
| oberflächenaktives Mittel: | 1 bis 30%, vorzugsweise 2 bis 20%. |

Emulgierbare Konzentrate:

| | |
|---|---|
| Aktiver Wirkstoff: | 10 bis 50%, bevorzugt 10 bis 40% |
| oberflächenaktives Mittel: | 5 bis 40%, bevorzugt 10 bis 20% |
| flüssiges Trägermittel: | 20 bis 95%, vorzugsweise 40 bis 80%. |

Stäube:

| | |
|---|---|
| Aktiver Wirkstoff: | 0,5 bis 10%, vorzugsweise 2 bis 8% |
| festes Trägermittel: | 99,5 bis 90%, vorzugsweise 98 bis 92%. |

Suspensions-Konzentrate:

| | |
|---|---|
| Aktiver Wirkstoff: | 5 bis 75%, vorzugsweise 10 bis 50% |
| Wasser: | 94 bis 25%, vorzugsweise 90 bis 30% |
| oberflächenaktives Mittel: | 1 bis 40%, vorzugsweise 2 bis 30%. |

Benetzbare Pulver:

| | |
|---|---|
| Aktiver Wirkstoff: | 5 bis 90%, vorzugsweise 10 bis 80% und insbesondere 20 bis 60% |
| oberflächenaktives Mittel: | 0,5 bis 20%, vorzugsweise 1 bis 15% |
| festes Trägermittel: | 5 bis 90%, vorzugsweise 30 bis 70%. |

Granulate:

| | |
|---|---|
| Aktiver Wirkstoff: | 0,5 bis 30%, vorzugsweise 3 bis 15% |
| festes Trägermittel: | 99,5 bis 70%, vorzugsweise 97 bis 85%. |

Während als Handelsware eher konzentrierte Mittel bevorzugt werden, verwendet der Endverbraucher in der Regel verdünnte Mittel. Die Anwendungsformen können bis hinab zu 0,001% an Wirkstoffgemisch

verdünnt werden.

Den beschriebenen Mitteln lassen sich andere biozide Wirkstoffe oder Mittel beimischen. So können die Mittel ausser den genannten Verbindungen der allgemeinen Formel I und der Formel II z.B. Insektizide, Fungizide, Bakterizide, Fungistatika, Bakteriostatika oder Nematizide zur Verbreiterung des Wirkungsspektrums enthalten.

Ein antagonistischer Effekt (Safening-Effekt) liegt immer dann vor, wenn die Schädigung der Kulturpflanze durch das Herbizid der Formel I nach Zugabe eines Wirkstoffes der Formel II kleiner ist, als wenn der Wirkstoff der Formel I allein angewendet wird.

Formulierungsbeispiele:

Beispiel 1:

Formulierungsbeispiele für antagonistische Wirkstoffgemische der Formeln I und II (% = Gewichtsprozent)

| a) Spritzpulver: | a) | b) | c) | d) |
|---|---|---|---|---|
| Wirkstoff I | 10% | 20% | 5% | 30% |
| Wirkstoff IIa oder IIb | 10% | 40% | 15% | 30% |
| Na-Ligninsulfonat | 5% | 5% | 5% | 5% |
| Na-Laurylsulfat | 3% | - | 3% | - |
| Na-Diisobutylnaphthalinsulfonat | - | 6% | - | 6% |
| Octylphenolpolyäthylenglykoläther 7-8 Mol AeO) | - | 2% | - | 2% |
| Hochdisperse Kieselsäure | 5% | 27% | 5% | 27% |
| Kaolin | 67% | - | 67% | - |

Das Wirkstoffgemisch wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

b) Emulsions-Konzentrat:

| | a) | b) | c) |
|---|---|---|---|
| Wirkstoff I | 5% | 5% | 12% |
| Wirkstoff IIa oder IIb | 5% | 20% | 13% |
| Octylphenolpolyäthylenglykoläther (4-5 Mol AeO) | 3% | 3% | 3% |
| Ca-Dodecylbenzolsulfonat | 3% | 3% | 2% |
| Ricinusölpolyglykoläther (36 Mol AeO) | 4% | 4% | 4% |
| Cyclohexanon | 30% | 30% | 31% |
| Xylolgemisch | 50% | 35% | 35% |

Aus diesen Konzentraten können durch Verdünnen mit Wasser Emulsionen jeder gewünschten Konzentration hergestellt werden.

c) Stäubemittel:

| | a) | b) | c) | d) |
|---|---|---|---|---|
| Wirkstoff I | 2% | 4% | 2% | 4% |
| Wirkstoff IIa oder IIb | 3% | 4% | 4% | 8% |
| Talkum | 95% | - | 94% | - |
| Kaolin | - | 92% | - | 88% |

Man erhält anwendungsfertige Stäubemittel, indem das Wirkstoffgemisch mit dem Träger vermischt und auf einer geeigneten Mühle vermahlen wird.

d) Extruder Granulat:

| | a) | b) | c) |
|---|---|---|---|
| Wirkstoff I | 5% | 3% | 5% |
| Wirkstoff IIa oder IIb | 5% | 7% | 15% |
| Na-Ligninsulfonat | 2% | 2% | 2% |
| Carboxymethylcellulose | 1% | 1% | 1% |
| Kaolin | 87% | 87% | 77% |

Das Wirkstoffgemisch wird mit den Zusatzstoffen vermischt, vermahlen und mit Wasser angefeuchtet. Dieses Gemisch wird extrudiert und anschliessend im Luftstrom getrocknet.

e) Umhüllungs-Granulat:

| | a) | b) |
|---|---|---|
| Wirkstoff I | 1,5% | 3% |
| Wirkstoff IIa oder IIb | 1,5% | 5% |
| Polyäthylenglykol (MG 200) | 3% | 3% |
| Kaolin | 94% | 89% |

Das fein gemahlene Wirkstoffgemisch wird in einem Mischer auf das mit Polyäthylenglykol angefeuchtete Kaolin gleichmässig aufgetragen. Auf diese Weise erhält man staubfreie Umhüllungs-Granulate.

f) Suspensions-Konzentrat:

| | a) | b) |
|---|---|---|
| Wirkstoff I | 20% | 20% |
| Wirkstoff IIa oder IIb | 20% | 40% |
| Aethylenglykol | 10% | 10% |
| Nonylphenolpolyäthylenglykoläther (15 Mol AeO) | 6% | 6% |
| Na-Ligninsulfonat | 10% | 10% |
| Carboxymethylcellulose | 1% | 1% |
| 37%ige wässrige Formaldehyd-Lösung | 0,2% | 0,2% |
| Silikonöl in Form einer 75%igen wässrigen Emulsion | 0,8% | 0,8% |
| Wasser | 32% | 12% |

Das fein gemahlene Wirkstoffgemisch wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Der antagonistische Effekt der Kombinationen der Wirkstoffe der Formeln I und II wird in den folgenden Beispielen demonstriert.

Biologische Beispiele:

Beispiel 2: Die Testpflanzen werden in Plastikcontainern, die 30 l sterilisierte Gartenerde enthalten, im Gewächshaus ausgesät. Nach dem Auflaufen werden die Pflanzen im 2- bis 3-Blattstadium mit einer

wässerigen Dispersion der Wirkstoffkombination als Tankmischung besprüht. Die Aufwandmenge an Dispersion beträgt 50 ml pro $m^2$. Nach 20 Tagen bei Temperaturen von 10-20°C, einer relativen Luftfeuchtigkeit von 60-70% und täglicher Bewässerung der Container erfolgt die Auswertung im Vergleich zur nun mit dem Herbizid behandelten und zur völlig unbehandelten Kontrolle.

Für die angegebenen Mischungsverhältnisse und Gesamtwirkstoffmengen werden folgende Ergebnisse erzielt:

Versuchsergebnisse:

Antagonistische Wirkung bei postemergenter Applikation in Getreidekulturen.

| Relative Schutzwirkung in % | | |
|---|---|---|
| Testpflanze | Mischung A:<br>375 g/ha Verb. I und<br>125 g/ha Verb. IIa | Mischung B:<br>125 g/ha Verb. I und<br>62 g/ha Verb. IIa |
| Weizen | 38 | 25 |
| Gerste | 25 | 25 |
| Avena fatua | 0 | 0 |
| Alopecurus myos | 0 | 0 |

Beispiel 3: Bei Applikation von wässrigen Wirkstoffgemischen der Formeln I und II wurden im Freiland die folgenden Resultate erzielt:

a) Feldversuch in Wintergerste:

postemergente Applikation, Bewertung 39 Tage nach der Behandlung in % Schädigung im Vergleich zur unbehandelten Kontrolle.

| Verbindung I<br>g AS/ha | 250 | | 0 |
|---|---|---|---|
| Verbindung IIa<br>g AS/ha | 0 | 100 | 100 |
| Wintergerste | 12 | 3 | 0 |
| Agrostis spica venti | 98 | 98 | 0 |

b) Feldversuch in Sommerweizen:

postemergente Applikation, Bewertung 26 Tage nach der Behandlung in % Schädigung im Vergleich zur unbehandelten Kontrolle.

| Verbindung I<br>g AS/ha | 250 | | 0 |
|---|---|---|---|
| Verbindung IIa<br>g AS/ha | 0 | 100 | 100 |
| Sommerweizen | 30 | 10 | 0 |
| Schadgräser | 98 | 98 | 0 |

Patentansprüche

1. Herbizides Mittel zur selektiven Unkrautbekämpfung in Getreide, dadurch gekennzeichnet, dass es neben Träger- und/oder anderen Zuschlagstoffen eine herbizide Wirkstoffkomponente der Formel I

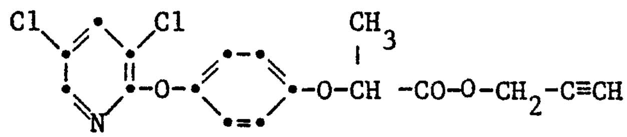

(I)

und zur Verhinderung von Kulturschäden eine antagonistische Wirkstoffkomponente der Formel II

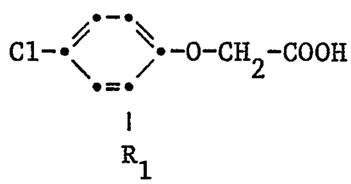

(II)

worin $R_1$ für Methyl oder Chlor, steht, enthält, wobei das Verhältnis der Wirkstoffe I : II zwischen 1 : 1 und 8 : 1 liegt.

2. Mittel gemäss Anspruch 1, dadurch gekennzeichnet, dass es als Herbizidkomponente 4-(3',5'-Dichlorpyridyl-2'-oxy)-α-phenoxy-propionsäurepropargylester und als antagonistische Komponente 2,4-Dichlorphenoxyessigsäure enthält.

3. Verfahren zur selektiven Bekämpfung von Unkräutern in Getreide, dadurch gekennzeichnet, dass man eine herbizid wirksame Menge des Wirkstoffs der Formel I

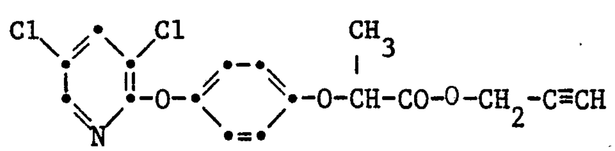

(I)

und eine zur Verhinderung der durch den Wirkstoff der Formel I verursachten Kulturschäden ausreichende Menge einer Verbindung der Formel II

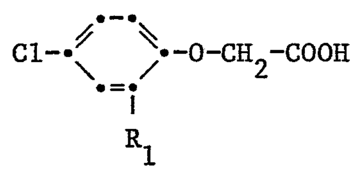

(II)

worin $R_1$ für Methyl oder Chlor, steht, auf die Kultur appliziert.

4. Verfahren gemäss Anspruch 3, dadurch gekennzeichnet, dass die Gesamtaufwandmengen der Verbindungen I und II jeweils 0,15 bis 0,60 kg/ha betragen.

5. Verfahren gemäss Anspruch 3, dadurch gekennzeichnet, dass die Aufwandmengen der antagonistischen Wirkstoffkomponente der Formel II 0,05 bis 0,15 kg/ha beträgt.

6. Verfahren gemäss Anspruch 3, dadurch gekennzeichnet, dass als Herbizidkomponente 4-(3',5'-Dichlorpyridyl-2'-oxy)-α-phenoxy-propionsäurepropargylester und als antagonistische Komponente 2,4-Dichlorphenoxyessigsäure verwendet werden.

7. Verfahren gemäss Anspruch 3, dadurch gekennzeichnet, dass man die Komponenten der Formeln I und II getrennt voneinander in zeitlich kurzem Abstand appliziert.

8. Verwendung eines Mittels gemäss Anspruch 1 als antagonistisches Mittel zur selektiven Unkrautbekämpfung in Getreide.

9. Verwendung der Einzelkomponenten der Formeln I und II gemäss Anspruch 1 getrennt voneinander in zeitlich kurzem Abstand zur

selektiven Unkrautbekämpfung in Getreide mit antagonistischer Wirkung.

10. Verwendung des Mittels gemäss Anspruch 1 oder der Einzelkomponente II zur Saatbeizung von Getreide zum Zwecke des Schützens des Saatguts vor der Schädigung durch Herbizide.

11. Getreidesaatgut, erhalten durch Saatbeizung mit einem Mittel gemäss Anspruch 1 oder mit der Einzelkomponente der Formel II.

FO 7.5 CW/hc*

0112799

Europäisches Patentamt

# EUROPÄISCHER RECHERCHENBERICHT

Nummer der Anmeldung

EP 83 81 0556

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | R. WEGLER: "Chemie der Pflanzenschutz- und Schädlingsbekämpfungsmittel", Band 8, 1982, Seiten 1-25, Springer-Verlag, Berlin, DE * Seite 14, Teil 5, Absatz 2 * --- | 1-11 | A 01 N 43/40<br>A 01 N 25/32 //<br>(A 01 N 43/40<br>A 01 N 39/04 ) |
| A,D | RESEARCH DISCLOSURE, Nr. 196, August 1980, Seiten 343-345, Nr. 19640, Havant, Hampshire, GB "Alpha-Phenoxypropionsaure-Derivate als aktive Komponente in herbiziden Mischungen" * Formel I und Verbindungen 118,120 * ----- | 1 | |
| | | | RECHERCHIERTE SACHGEBIETE (Int. Cl. 3) |
| | | | A 01 N |

Der vorliegende Recherchenbericht wurde für alle Patentansprüche erstellt.

| Recherchenort | Abschlußdatum der Recherche | Prüfer |
|---|---|---|
| DEN HAAG | 15-03-1984 | DECORTE D. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503. 03.82

BAD ORIGINAL